# EUROPEAN PATENT APPLICATION

(11) **EP 4 826 029 A1**
(43) Date of publication of application: **21.10.2026**
(21) Application number: 24904290.4
(22) Date of filing: 13.12.2024
(51) Int. Cl.: C22C 38/02, C22C 38/04, C22C 38/06, C22C 38/00, C22C 38/12, C22C 38/42, C22C 38/58, C22C 38/52, C21D 8/12

(54) **IRON CORE COMPRISNG NON-ORIENTED ELECTRICAL STEEL SHEET AND METHOD FOR MANUFACTURING SAME**

(30) Priority: 15.12.2023 KR 20230183835
(71) Applicant: POSCO Co., Ltd, Gyeongsangbuk-do 37859 (KR)
(72) Inventor: Kim, Jaehoon, Pohang-si, Gyeongsangbuk-do 37859 (KR); Lee, Sangwoo, Pohang-si, Gyeongsangbuk-do 37859 (KR)
(74) Representative: Meissner Bolte Partnerschaft mbB
(86) International application number: PCT/KR2024/020330
(87) International publication number: WO 2025/127725

(57) **Abstract**

An iron core according to an embodiment of the present disclosure includes a laminate in which a non-oriented electrical steel sheet including, in wt%, Si: 1.5 to 4.5%, Al: 0.1 to 2.0%, and Mn: 0.1 to 2.0% and including the balance of Fe and an inevitable impurity is stacked in a plural number. The non-oriented electrical steel sheet has an area fraction of a grain having an orientation of 15° or less from {100}<025> of 7% or more.

## Description

### [Technical Field]

An embodiment of the present disclosure relates to an iron core including a non-oriented electrical steel sheet and a method for manufacturing the same. Specifically, the embodiment of the present disclosure relates to the iron core including the non-oriented electrical steel sheet having an improved magnetic characteristic by adjusting a pressurizing condition for a laminate during stress relief annealing (SRA) to form a plurality of {100}<025> fractions, and the method for manufacturing the same.

### [Background Art]

A non-oriented electrical steel sheet is mainly used in a motor that converts an electrical energy into a mechanical energy, and in order to achieve a high efficiency in the process, an excellent magnetic characteristic of the non-oriented electrical steel sheet is required. In particular, as an eco-friendly vehicle driven by a motor instead of an internal combustion engine has been gaining attention recently, demand for the non-oriented electrical steel sheet used as a core material of a driving motor is increasing, and for this purpose, the non-oriented electrical steel sheet with the excellent magnetic characteristic and an excellent strength is required. A magnetic characteristic of the non-oriented electrical steel sheet is mainly evaluated by an iron loss and a magnetic flux density. The iron loss may refer to an energy loss that occurs at a specific magnetic flux density and a specific frequency, and the magnetic flux density may refer to a degree of magnetization obtained under a specific magnetic field. When the iron loss is low, a motor with a high energy efficiency may be manufactured under the same condition, and when the magnetic flux density is high, a motor may be miniaturized or a copper loss may be reduced. Therefore, a driving motor with an excellent efficiency and an excellent torque may be produced by using the non-oriented electrical steel sheet with the low iron loss and the high magnetic flux density, so that driving distance and output of the eco-friendly vehicle are improved. A characteristic of the non-oriented electrical steel sheet that should be considered is changed depending on an operating condition of the motor. W_{15/50} that is an iron loss when a 1.5T magnetic field is applied at a commercial frequency of 50 Hz is widely used as a general criterion for evaluating the characteristic of the non-oriented electrical steel sheet used in the motor. However, because a magnetic characteristic is often important at a low magnetic field of 1.0 T or less and a high frequency of 400 Hz or higher in the non-oriented electrical steel sheet with a thickness of 0.35 mm or less used in a driving motor of the eco-friendly vehicle, a characteristic of the non-oriented electrical steel sheet is often evaluated using a W_{10/400} iron loss. A temperature of the motor is increased to around 200°C during high-speed rotation, and in this case, deterioration of a mechanical characteristic occurs. Therefore, it is important to maintain the mechanical characteristic at the temperature to increase an efficiency of the motor.

### [Disclosure]

### [Technical Problem]

An embodiment of the present disclosure provides an iron core including a non-oriented electrical steel sheet and a method for manufacturing the same. Specifically, the embodiment of the present disclosure provides the iron core including the non-oriented electrical steel sheet having an improved magnetic characteristic by adjusting a pressurizing condition for a laminate during stress relief annealing (SRA) to form a plurality of {100}<025> fractions, and the method for manufacturing the same.

### [Technical Solution]

An iron core according to an embodiment of the present disclosure includes a laminate in which a non-oriented electrical steel sheet including, in wt%, Si: 1.5 to 4.5%, Al: 0.1 to 2.0%, and Mn: 0.1 to 2.0% and including the balance of Fe and an inevitable impurity is stacked in a plural number. The non-oriented electrical steel sheet has an area fraction of a grain having an orientation of 15° or less from {100}<025> of 7% or more.

The non-oriented electrical steel sheet may further include at least one of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

The non-oriented electrical steel sheet may further include 0.005 to 0.200 wt% of each or a combined amount of one or more of Sn, Sb, Bi, Pb, Ge, and As.

The non-oriented electrical steel sheet may further include at least one of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

The non-oriented electrical steel sheet may further include at least one of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

A method for manufacturing an iron core according to an embodiment of the present disclosure includes: preparing a non-oriented electrical steel sheet including, in wt%, Si: 1.5 to 4.5%, Al: 0.1 to 2.0%, and Mn: 0.1 to 2.0% and including the balance of Fe and an inevitable impurity; punching and stacking the non-oriented electrical steel sheet to manufacture a laminate; and annealing the laminate while pressing the laminate at a pressure of 0.1 to 2 MPa.

In the preparing of the non-oriented electrical steel sheet, the non-oriented electrical steel sheet may include 3 area% or more of a non-recrystallization.

In the preparing of the non-oriented electrical steel sheet, an average diameter of a grain of the non-oriented electrical steel sheet may be 30 µm or less.

A cracking temperature of the annealing of the laminate may be 750 to 850°C.

The annealing of the laminate may be performed to satisfy Equation below. [Equation] 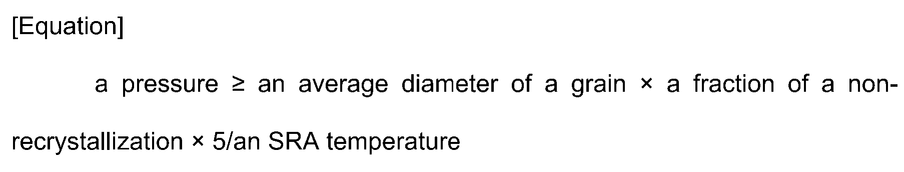 a pressure ≥ an average diameter of a grain × a fraction of a non-recrystallization × 5/an SRA temperature

In Equation above, a unit of the pressure may be MPa, a unit of the average diameter of the grain may be µm, a unit of the fraction of the non-recrystallization may be area%, and a unit of the SRA temperature may be °C.

The preparing of the non-oriented electrical steel sheet may include: hot-rolling a slab including, in wt%, Si: 1.5 to 4.5%, Al: 0.1 to 2.0%, and Mn: 0.1 to 2.0% and including the balance of Fe and an inevitable impurity to manufacture a hot-rolled steel sheet; cold-rolling the hot-rolled steel sheet to manufacture a cold-rolled sheet; and annealing the cold-rolled sheet.

The slab may further include at least one of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

The slab may further include 0.005 to 0.200 wt% of each or a combined amount of one or more of Sn, Sb, Bi, Pb, Ge, and As.

The slab may further include at least one of Cu: 0.005 to 0.2 wt%, Cr: 0.01 to 0.5 wt%, Ni: 0.05 wt% or less (excluding 0%), and Zn: 0.01 wt% or less (excluding 0%).

The slab may further include at least one of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), Co: 0.05 wt% or less (excluding 0%), and Mg: 0.0050 wt% or less (excluding 0%).

The preparing of the non-oriented electrical steel sheet may further include heating the cold-rolled sheet before the annealing of the cold-rolled sheet, a heating rate in a range of 300 to 500°C may be 40°C/sec or more, and a heating rate in a range of 500 to 700°C may be 20 to 38°C/sec.

In the annealing of the cold-rolled sheet, a cracking temperature may be 850°C or less.

### [Advantageous Effects]

An iron core according to an embodiment of the present disclosure may have a plurality of {100}<025> grains to have excellent isotropy of an iron loss.

Ultimately, a non-oriented electrical steel sheet according to an embodiment of the present disclosure may contribute to manufacturing of a motor for an eco-friendly vehicle, a motor for a high-efficiency home appliance, and a super premium grade electric motor.

### [Mode for Invention]

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Unless otherwise stated, % means wt%, and 1 ppm is 0.0001 wt%.

In an embodiment of the present disclosure, inclusion of an additional element means replacing the balance of iron (Fe) by an additional amount of the additional element.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined.

Hereinafter, an embodiment of the present disclosure will be described in detail so that a person of ordinary skill in the art to which the present disclosure belongs may easily implement the present disclosure. The present disclosure may be modified in various ways, all without departing from the spirit or scope of the present disclosure.

An iron core according to an embodiment of the present disclosure may include a laminate in which a non-oriented electrical steel sheet including, in wt%, Si: 1.5 to 4.5%, Al: 0.1 to 2.0%, and Mn: 0.1 to 2.0% and including the balance of Fe and an inevitable impurity is stacked in a plural number, and the non-oriented electrical steel sheet may have an area fraction of a grain having an orientation of 15° or less from {100}<025> of 7% or more.

In an embodiment of the present disclosure, the iron core may refer to an iron core used in a motor, and may be used for a stator or a rotor. For example, the iron core may be an iron core for the stator.

In an embodiment of the present disclosure, the iron core may be an integrally punched iron core or a divided iron core, and for example, the iron core may be the integrally punched iron core.

The iron core may have a shape in which two or more non-oriented electrical steel sheets are stacked, and an insulating film may exist between the non-oriented electrical steel sheets.

The non-oriented electrical steel sheet may include, in weight%, Si: 1.5 to 4.5%, Al: 0.1 to 2.0%, and Mn: 0.1 to 2.0%, and may include the balance of Fe and the inevitable impurity.

Hereinafter, a reason for limiting the components of the non-oriented electrical steel sheet will be described.

### Si: 1.5 to 4.5 wt%

Silicon (Si) may play a role in lowering an iron loss by increasing resistivity of a material and increasing a strength through solid solution strengthening. If too little Si is added, an effect of improving the iron loss and the strength may be insufficient. If too much Si is added, brittleness of the material may be increased so that rolling productivity is rapidly reduced, and a surface oxide layer and surface oxide that are harmful to a magnetic characteristic may be formed. Thus, the non-oriented electrical steel sheet may include 1.5 to 4.5 wt% of Si. For example, the non-oriented electrical steel sheet may include 2.0 to 4.3 wt% of Si. For example, the non-oriented electrical steel sheet may include 2.5 to 3.9 wt% of Si. For example, the non-oriented electrical steel sheet may include 3.15 to 3.85 wt% of Si.

### Al: 0.1 to 2.0 wt%

Aluminum (Al) may play a role in lowering an iron loss by increasing resistivity of a material and increasing a strength through solid solution strengthening. If too little Al is added, fine nitride may be formed so that it is difficult to obtain an effect of improving a magnetic characteristic. If too much Al is added, nitride may be excessively formed to degrade the magnetic characteristic, and a problem may occur in all processes such as steelmaking and continuous casting so that productivity is significantly reduced. Thus, the non-oriented electrical steel sheet may include 0.1 to 2.0 wt% of Al. For example, the non-oriented electrical steel sheet may include 0.2 to 2.0 wt% of Al. For example, the non-oriented electrical steel sheet may include 0.5 to 1.9 wt% of Al.

### Mn: 0.1 to 2.0 wt%

Manganese (Mn) may play a role in improving an iron loss by increasing resistivity of a material, and may play a role in forming sulfide. If too little Mn is added, sulfide may be finely formed to degrade a magnetic characteristic, and if too much Mn is added, fine MnS may be excessively precipitated and formation of {111} texture unfavorable to the magnetic characteristic may be encouraged so that a magnetic flux density is rapidly reduced. Thus, the non-oriented electrical steel sheet may include 0.1 to 2.0 wt% of Mn. For example, the non-oriented electrical steel sheet may include 0.2 to 1.8 wt% of Mn. For example, the non-oriented electrical steel sheet may include 0.3 to 1.5 wt% of Mn.

The non-oriented electrical steel sheet according to an embodiment of the present disclosure may further include at least one of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

### P: 0.1 wt% or less

Phosphorus (P) may improve a magnetic flux density as a grain boundary segregation element, but if too much P is added, brittleness of the steel sheet may be increased so that weldability is poor. For example, the non-oriented electrical steel sheet may include 0.0001 to 0.0500 wt% of P.

### C: 0.005 wt% or less

Carbon (C) may cause magnetic aging and may be combined with another impurity element to form carbide so that it impedes a grain boundary or a movement of a magnetic wall to deteriorate a magnetic characteristic. For example, the non-oriented electrical steel sheet may include 0.0001 to 0.003 wt% of C.

### S: 0.005 wt% or less

Sulfur (S) may form MnS and CuS that are fine precipitates to deteriorate a magnetic characteristic and hot workability. For example, the non-oriented electrical steel sheet may include 0.0001 to 0.0030 wt% of S.

### Ti: 0.005 wt% or less

Titanium (Ti) may have a strong tendency in which a precipitate is formed within a steel, and may form fine carbide, fine nitride, or fine sulfide within a base material to suppress growth of a grain and a movement of a magnetic wall so that it deteriorates an iron loss. For example, the non-oriented electrical steel sheet may include 0.0001 to 0.003 wt% of Ti.

### N: 0.005 wt% or less

Nitrogen (N) not only may form a fine AlN precipitate inside a base material but also may be combined with another impurity to form a fine precipitate so that it inhibits growth of a grain and a movement of a magnetic wall to worsen an iron loss. For example, the non-oriented electrical steel sheet may include 0.0001 to 0.0030 wt% of N.

The non-oriented electrical steel sheet according to an embodiment of the present disclosure may further include 0.005 to 0.200 wt% of each or a combined amount of one or more of Sn, Sb, Bi, Pb, Ge, and As.

### Sn and Sb

Tin (Sn) and antimony (Sb) may play a role in inhibiting development of {111} orientation that deteriorates a magnetic characteristic by being segregated at an initial grain boundary of final recrystallization annealing. If too much Sn and too much Sb are added, recovery and growth of a coarse elongation band structure may be hindered, and a surface quality may be deteriorated. Therefore, one or more of Sn and Sb may be further added within the above-described range. For example, the non-oriented electrical steel sheet may include 0.005 to 0.200 wt% of Sn or 0.005 to 0.200 wt% of Sb. For example, the non-oriented electrical steel sheet may include 0.01 to 0.060 wt% of Sn or 0.005 to 0.040 wt% of Sb. For example, the non-oriented electrical steel sheet may include 0.01 to 0.060 wt% of Sn and 0.005 to 0.040 wt% of Sb.

### Bi, Pb, Ge, and As

When bismuth (Bi), lead (Pb), germanium (Ge), and arsenic (As) are additionally added, bismuth (Bi), lead (Pb), germanium (Ge), and arsenic (As) may be segregated at a grain boundary to relieve stress concentration at the grain boundary during cold rolling. Thus, bismuth (Bi), lead (Pb), germanium (Ge), and arsenic (As) may improve a magnetic flux density by suppressing a recrystallization of <111>//ND orientation grain in annealing of the recrystallization that is a post-process. If bismuth (Bi), lead (Pb), germanium (Ge), and arsenic (As) are properly added, the above-described effect may be additionally obtained, but if too much of them is included, a large amount of segregation may be generated so that the magnetic flux density and an iron loss may be rather degraded by suppressing growth of the grain.

The non-oriented electrical steel sheet according to an embodiment of the present disclosure may further include at least one of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

### Cu: 0.005 to 0.200 wt%

Copper (Cu) may play a role in forming sulfide together with Mn. If too little Cu is added, (Cu·Mn)S may be finely precipitated so that a magnetic characteristic is deteriorated. If too much Cu is added, high-temperature brittleness may occur so that a crack is formed during continuous casting or hot rolling. For example, the non-oriented electrical steel sheet may include 0.01 to 0.10 wt% of Cu.

### Cr: 0.01 to 0.50 wt%

Chromium (Cr) may play a role in improving an iron loss by increasing resistivity. If too little Cr is added, a resistivity-increasing effect may not be sufficient. If too much Cr is included, a magnetic flux density may be decreased. For example, the non-oriented electrical steel sheet may include 0.050 to 0.20 wt% of Cr.

### Ni: 0.05 wt% or less

Nickel (Ni) may react with impurity elements to form fine sulfide, fine carbide, and fine nitride so that it has a harmful influence on a magnetic characteristic. For example, the non-oriented electrical steel sheet may include 0.001 to 0.03 wt% of Ni.

### Zn: 0.01 wt% or less

If a content of zinc (Zn) is excessive, zinc (Zn) may act as an impurity to deteriorate a magnetic characteristic. Thus, Zn may be added within the above-described range. For example, the non-oriented electrical steel sheet may include 0.001 to 0.005 wt% of Zn.

### Co: 0.05 wt% or less

Cobalt (Co) may not form a fine-sized precipitate that degrades a magnetic characteristic of the steel sheet, but may increase a high-temperature strength to cause a defect in a shape of a coil after hot rolling.

The non-oriented electrical steel sheet according to an embodiment of the present disclosure may further include at least one of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.0050 wt% or less (excluding 0%), Te: 0.0100 wt% or less (excluding 0%), and Mg: 0.0050 wt% or less (excluding 0%).

### Mo: 0.030 wt% or less

If an excessive amount of molybdenum (Mo) is added, segregation of a segregation element may be suppressed so that an effect of improving a texture is reduced. Thus, the non-oriented electrical steel sheet may include 0.03 wt% or less of Mo. A lower limit thereof is not particularly limited, but Mo may play a role in improving the texture by being segregated on a surface and a grain boundary so that the non-oriented electrical steel sheet includes 0.001 wt% or more of Mo. For example, the non-oriented electrical steel sheet may include 0.001 to 0.010 wt% of Mo. For example, the non-oriented electrical steel sheet may include 0.005 to 0.010 wt% of Mo.

### B: 0.0050 wt% or less

If an excessive amount of boron (B) is added, deterioration of a magnetic characteristic may be caused due to formation of an inclusion within a steel or the like. Thus, the non-oriented electrical steel sheet may include 0.005 wt% or less of B. A lower limit thereof is not particularly limited, but the non-oriented electrical steel sheet may include 0.0001 wt% of B due to a steelmaking cost. For example, the non-oriented electrical steel sheet may include 0.0001 to 0.0030 wt% of B.

### V: 0.0050 wt% or less

Vanadium (V) may have a strong tendency in which a precipitate is formed within a steel, and may form fine carbide or fine nitride within a base material to suppress growth of a grain and a movement of a magnetic wall so that it deteriorates an iron loss. Thus, the non-oriented electrical steel sheet may include 0.0050 wt% or less of V. A lower limit thereof is not particularly limited, but the non-oriented electrical steel sheet may include 0.0003 wt% of V due to a steelmaking cost. That is, the non-oriented electrical steel sheet may include 0.0003 to 0.0050 wt% of V. For example, the non-oriented electrical steel sheet may include 0.0003 to 0.0030 wt% of V.

### Ca: 0.0050 wt% or less

Calcium (Ca) may have a strong tendency in which a precipitate is formed within a steel, and may form fine sulfide within a base material to suppress growth of a grain and a movement of a magnetic wall so that it deteriorates an iron loss.

### Nb: 0.0050 wt% or less

Niobium (Nb) may have a strong tendency in which a precipitate is formed within a steel, and may form fine carbide or fine nitride within a base material to suppress growth of a grain and a movement of a magnetic wall so that it deteriorates an iron loss. Thus, the non-oriented electrical steel sheet may include 0.0050 wt% or less of Nb. A lower limit thereof is not particularly limited, but the non-oriented electrical steel sheet may include 0.0003 wt% of Nb due to a steelmaking cost. That is, the non-oriented electrical steel sheet may include 0.0003 to 0.0050 wt% of Nb. For example, the non-oriented electrical steel sheet may include 0.0003 to 0.0030 wt% of Nb.

### Zr: 0.0050 wt% or less

If an excessive amount of zirconium (Zr) is added, deterioration of a magnetic characteristic may be caused due to formation of an inclusion within a steel or the like. Thus, the non-oriented electrical steel sheet may include 0.005 wt% or less of Zr. A lower limit thereof is not particularly limited, but the non-oriented electrical steel sheet may include 0.0001 wt% of Zr due to a steelmaking cost. That is, the non-oriented electrical steel sheet may include 0.0001 to 0.0050 wt% of Zr. For example, the non-oriented electrical steel sheet may include 0.0005 to 0.0030 wt% of Zr.

### Te: 0.0100 wt% or less

Because tellurium (Te) is diffused into an oxide layer on a surface of a hot-rolled coil to increase a coefficient of friction between the oxide layer and a rolling work roll and be concentrated at a lower portion of the oxide layer so it improves hardness, tellurium (Te) may be added to prevent the oxide layer crushed during rolling from being pressed into a base material and remove the oxide layer crushed during the rolling. If an amount of Te added is too small, an effect thereof may be minimal. If too much Te is added, the oxide layer may be easily removed so that the base material is in direct contact with the work roll and the effect is reduced, and a deformation band may be excessively generated within the steel sheet during cold rolling so that {111}//ND texture unfavorable to a magnetic characteristic is developed. For example, the non-oriented electrical steel sheet may include 0.0001 to 0.007 wt% of tellurium.

### Mg: 0.0050 wt% or less

Magnesium (Mg) may be an element that is mainly combined with S to form sulfide, and may affect a surface oxide layer of a base iron. Thus, the non-oriented electrical steel sheet may include 0.0050 wt% or less of Mg. A lower limit thereof is not particularly limited, but the non-oriented electrical steel sheet may include 0.0001 wt% of Mg due to a steelmaking cost. That is, the non-oriented electrical steel sheet may include 0.0001 to 0.0050 wt% of Mg. For example, the non-oriented electrical steel sheet may include 0.0005 to 0.0030 wt% of Mg.

The balance (or the remainder) may include Fe and an inevitable impurity. The inevitable impurity may be an impurity mixed in a steelmaking step and a manufacturing process of the non-directional electrical steel sheet, and because this is widely known in the field, a detailed description thereof will be omitted. An embodiment of the present disclosure does not exclude addition of an element in addition to the above-described alloy component, and may be variously included within a range that does not impair the technical idea of the present disclosure. If the additional element is included, the additional element may replace the balance of iron (Fe).

In an embodiment of the present disclosure, resistivity of the non-oriented electrical steel sheet may be 55 µΩ·cm or more. The larger the resistivity, the better it is for reducing an eddy current loss in a high frequency rotator, but if the resistivity becomes too large, a magnetic flux density may be deteriorated. In an embodiment of the present disclosure, the resistivity may be estimated from an equation (i.e., 13.25+11.3×([Si]+[Al]+[Mn]/2+[Cu]/2+[Cr]/2)). For example, the resistivity may be 58 to 80 µΩ·cm.

The embodiment of the present disclosure may improve anisotropy of the iron core by increasing a ratio of grains (hereinafter referred to as {100}<025> grains) having an orientation of 15° or less from {100}<025> within the non-oriented electrical steel sheet. If a fraction of the {100}<025> grain is increased, a fraction of a texture having {100}//ND may be increased so that an anisotropy of an iron loss is improved. For example, the area fraction of the grain having the orientation of 15° or less from {100}<025> within the non-oriented electrical steel sheet may be 7.0% or more. For example, the area fraction may be 8.0 to 15.0%. For example, the area fraction may be 8.5 to 13.0%. The fraction of the grain may be analyzed using SEM-EBSD for a 1/2 to 1/4 thickness region of a total thickness in an ND direction by separating stacked non-oriented electrical steel sheets one by one. In this case, a tolerance angle may be within 15°.

As described above, the embodiment of the present disclosure may improve the magnetic characteristic by appropriately controlling the steel component and appropriately forming the texture. For example, a circumferential iron loss (W_{10/400}) of the non-oriented electrical steel sheet may be 17.0 W/Kg or less based on a thickness of 0.25 mm. Additionally, a magnetic flux density (B₅₀) may be 1.65 T or more. The iron loss (W_{10/400}) may be an iron loss when a magnetic flux density of 1.0 T is induced at a frequency of 400 Hz. The circumferential iron loss may be measured with a ring core measuring instrument, or may be obtained by measuring a magnetic characteristic for each direction and averaging the measured characteristics.

A method for manufacturing an iron core according to an embodiment of the present disclosure may include a step of preparing a non-oriented electrical steel sheet including, in wt%, Si: 1.5 to 4.5%, Al: 0.1 to 2.0%, and Mn: 0.1 to 2.0% and including the balance of Fe and an inevitable impurity; a step of punching and stacking non-oriented electrical steel sheets to manufacture a laminate; and a stress relief annealing step of annealing the laminate while pressing the laminate at a pressure of 0.1 to 2 MPa.

First, the non-oriented electrical steel sheet including, in wt%, Si: 1.5 to 4.5%, Al: 0.1 to 2.0%, and Mn: 0.1 to 2.0% and including the balance of Fe and the inevitable impurity may be prepared. Because the component of the non-oriented electrical steel sheet is described above, a redundant description thereof will be omitted. The steel component may not be substantially changed during the laminate manufacturing step and the stress relief annealing step.

In the step of preparing the non-oriented electrical steel sheet, the non-oriented electrical steel sheet may include 3 area% or more of a non-recrystallization. When some non-recrystallizations are present, a recrystallization during SRA under pressure may help to form the {100}<025> grain, and a mechanical strength of the iron core may be improved. The non-recrystallization may refer to a rolling elongation grain in which the recrystallization does not occur when a cross-section of the non-oriented electrical steel sheet is measured. For example, the non-oriented electrical steel sheet may include 3 to 50 area% of the non-recrystallization. For example, the non-oriented electrical steel sheet may include 4 to 9 area% of the non-recrystallization.

In the step of preparing the non-oriented electrical steel sheet, an average grain diameter of the grain of the non-oriented electrical steel sheet may be 30 µm or less. If the grain is formed into a small size, growth of the grain during SRA under pressure may help to form the {100}<025> grain, and a mechanical strength of the iron core may be improved. A diameter of the grain may be measured for a cross-section in a TD direction, and may be calculated as a diameter of a circle by assuming the circle having the same area. For example, the average diameter of the grain may be 3 to 30 µm. For example, the average diameter of the grain may be 10 to 25 µm.

The step of preparing the non-oriented electrical steel sheet may include a step of hot-rolling a slab including, in wt%, Si: 1.5 to 4.5%, Al: 0.1 to 2.0%, and Mn: 0.1 to 2.0% and including the balance of Fe and an inevitable impurity to manufacture a hot-rolled steel sheet; a step of cold-rolling the hot-rolled steel sheet to manufacture a cold-rolled steel sheet; and a cold-rolled steel sheet annealing step of annealing the cold-rolled steel sheet.

First, the slab may be hot rolled.

Because an alloy component of the slab is described in the alloy component of the above-described non-oriented electrical steel sheet, a redundant description thereof will be omitted. Because the alloy component is not substantially changed during a manufacturing process of the non-oriented electrical steel sheet, the alloy component of the non-oriented electrical steel sheet and the alloy component of the slab may be substantially the same.

For example, the slab may include, in wt%, Si: 1.5 to 4.5%, Al: 0.1 to 2.0%, and Mn: 0.1 to 2.0%, and may include the balance of Fe and the inevitable impurity.

Because another additional element is described in the alloy component of the non-oriented electrical steel sheet, a redundant description thereof will be omitted.

The slab may be heated before the hot rolling. A heating temperature of the slab is not limited, but the slab may be heated to 1200°C or less. If the heating temperature of the slab is too high, a precipitate such as AlN or MnS present within the slab may be re-dissolved and then may be finely precipitated during the hot rolling and the annealing to inhibit growth of a grain and reduce a magnetic characteristic.

Next, the slab may be hot rolled to manufacture the hot-rolled sheet. A thickness of the hot-rolled sheet may be 1.0 to 4.5 mm. In a process of manufacturing the hot-rolled sheet, a finishing rolling temperature may be 800°C or higher. For example, the finishing rolling temperature may be 800 to 1000°C. The hot-rolled sheet may be wound at a temperature of 600°C or higher. For example, the thickness of the hot-rolled sheet may be 1.5 to 4.3 mm.

After the hot-rolled steel sheet is manufactured, a step of annealing the hot-rolled steel sheet may be further included. In this case, a cracking temperature may be 800 to 1100°C. If a temperature of the annealing is too low, a recrystallized structure may not be formed or may grow finely so that an effect of increasing a magnetic flux density is small. If the temperature of the annealing is too high, a magnetic characteristic may actually be deteriorated, and rolling workability may be deteriorated due to deformation of a sheet shape. For example, a range of the temperature may be 830 to 1080°C. A cracking time may be 30 to 300 seconds. The step of annealing the hot-rolled sheet may also be omitted.

Next, the hot-rolled steel sheet may be cold rolled to manufacture the cold-rolled sheet. In this case, the cold rolling may be performed at a reduction ratio of 40 to 85%. If the reduction ratio is too low, deformation energy accumulated in the rolled steel sheet may be small so that recrystallization becomes difficult in a subsequent annealing process. Thus, a rolling structure may remain so that a problem occurs in improving a magnetic flux density and an iron loss. Conversely, if the reduction ratio is too high, a recrystallization of <111>//ND orientation grain may be promoted in a subsequent annealing process and a grain may be fine so that a problem in which the magnetic flux density is inferior and the iron loss is increased occurs. For example, the reduction ratio may be 60 to 75%. In the cold rolling step, a tandem cold rolling mill that continuously cold-rolls the steel sheet using a plurality of rolling stands or a reverse rolling mill that discontinuously cold-rolls the steel sheet using 12 or more rolling rolls may be used. A final thickness of the rolling may be 0.1 to 0.35 mm.

In the step of manufacturing the cold-rolled sheet, one cold rolling or two or more cold rollings with intermediate annealing interposed therebetween may be performed.

Next, before the cold-rolled sheet is annealed, the cold-rolled sheet may be heated. A heating rate in a range of 300 to 500°C may be 40°C/sec or more, and a heating rate in a range of 500 to 700°C may be 20 to 38°C/sec. The heating rate in the range of 300 to 500°C needs to be high. In this case, the rate may be increased so that a thin and dense oxide layer is formed on a surface thereof. Thus, additional oxidation may be prevented, and a magnetic characteristic may be further improved. It may also help to generate a plurality of {100}<025> grains. For example, the heating rate in the range of 300 to 500°C may be 43 to 70°C/sec.

The heating rate in the range of 500 to 700°C may be relatively low. However, if the heating rate is too low or too high, {111}/ND orientation may develop to hinder formation of a plurality of grains. For example, the heating rate in the range of 500 to 700°C may be 21 to 37°C/sec.

Next, the cold-rolled sheet may be annealed. In this case, a cracking temperature may be 850°C or less. If the cracking temperature is too high, a grain may not grow sufficiently so that a problem in which a hysteresis loss is increased so that an iron loss is deteriorated. For example, the cold-rolled sheet may be annealed at a temperature of 750 to 850°C. It may crack for 10 to 300 seconds.

After the annealing of the cold-rolled sheet, an insulating film may be formed. The insulating film may be treated with an organic film, an inorganic film, or an organic-inorganic composite film, and may also be treated with another insulating film agent.

Returning to a description of the method for manufacturing the iron core, the laminate may be manufactured by punching and stacking the non-oriented electrical steel sheets. The punching may refer to cutting the non-oriented electrical steel sheet into a shape of an iron core of a motor, and the non-oriented electrical steel sheet may be punched into a ring shape. The stacking may mean stacking electrical steel sheets in a thickness direction, and may be stacked to a height of 20 mm to 300 mm as needed.

Next, in the stress relief annealing step, the laminate may be annealed while being pressurized. The stress relief annealing may be a process that removes a stress applied to the steel sheet during the punching. In an embodiment of the present disclosure, a large amount of {100}<025> may be generated and an anisotropy of an iron loss may be improved by applying a pressure to the laminate during the stress relief annealing to apply a tensile stress in all directions perpendicular to the core surface. For example, a pressure applied to the laminate may be 0.10 to 2.00 MPa. If the pressure is too low, it may be difficult to achieve the above purpose. If the pressure is too high, {111}/ND orientation may develop so that less {100}<025> is formed. For example, the pressure may be 0.50 to 1.75 MPa.

A cracking temperature of the stress relief annealing step may be 750 to 850°C. If the cracking temperature is too low, a stress may remain during the punching so that the remaining stress adversely affects a magnetic characteristic. If the cracking temperature is too high, an oxide layer may develop to lead to magnetic deterioration. For example, the cracking temperature may be 775 to 825°C. A cracking time may be 30 minutes to 6 hours. An atmosphere may be a nitrogen atmosphere.

The stress relief annealing step may be performed to satisfy Equation 1 below. [Equation 1] 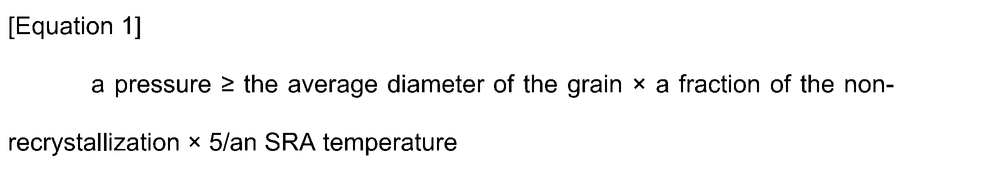 a pressure ≥ the average diameter of the grain × a fraction of the non-recrystallization × 5/an SRA temperature

In Equation 1 above, a unit of the pressure may be MPa, a unit of the average grain diameter may be µm, a unit of the fraction of the non-recrystallization may be area%, and a unit of the SRA temperature may be °C.

As the SRA cracking temperature is low, the grain is large, and an applied pressure is high, a large amount of {100}<025> may be generated.

Hereinafter, the present disclosure will be described in more detail through an embodiment. However, the embodiment is only intended to illustrate the present disclosure, and the present disclosure is not limited thereto.

### Embodiment

A slab containing the following Table 1 and another impurity is manufactured. C, S, N, and Ti are all controlled to 0.0030% or less. The slab is heated to 1150°C and is hot rolled to a finishing temperature of 850°C so that a hot-rolled sheet having a thickness of 2.0 mm is manufactured. The hot-rolled sheet is annealed at 1100°C for 4 minutes, and pickling therefor is performed. Thereafter, it is cold rolled to a thickness of 0.25 mm. Annealing of the cold-rolled sheet is performed under a condition shown in Table 2 below. A fraction of a non-recrystallization and an average grain diameter of a non-oriented electrical steel sheet after the annealing of the cold-rolled sheet are measured and listed in Table 2 below.

The non-oriented electrical steel sheet in which the annealing of the cold-rolled sheet is performed is punched into a ring shape with an outer diameter of 100 mm and an inner diameter of 80 mm and is stacked to a height of 30 mm so that a pressure is applied to the stacked steel sheets with a jig and SRA is performed to finally manufacture an iron core. An SRA cracking time is 1 hour, and an atmosphere is nitrogen.

In a method for measuring the fraction of the non-recrystallization, a fraction of an elongation grain is calculated through EBSD. For example, grain orientation spread (GOS) is calculated to be 2° or more.

In a method for measuring the average grain diameter, the grain diameter is calculated from the number of grains per unit area using an optical microscope.

In a method for measuring the fraction of the {100}<025> grain, the non-oriented electrical steel sheet existing in the iron core is separated and is polished in an ND direction so that a 1/2t thickness area is observed using EBSD to obtain the fraction. In this case, a tolerance angle is set to 15°.

In a method for measuring the circumferential iron loss (W_{10/400}), the circumferential iron loss is measured by winding a Cu wire around the non-oriented electrical steel sheet with a ring shape.

**(Table 1)**

| Steel grade (wt%) | Si | Al | Mn | Sn | Sb | Resistivity (µΩ·cm) |
|---|---|---|---|---|---|---|
| 1 | 3.6 | 0.8 | 0.8 | 0.050 | 0.030 | 67 |
| 2 | 3.4 | 0.5 | 0.5 | 0.030 | 0.010 | 60 |
| 3 | 3.4 | 0.5 | 1.0 | 0.050 | 0.020 | 63 |
| 4 | 3.2 | 1.0 | 1.5 | 0.030 | 0.030 | 69 |
| 5 | 3.3 | 1.0 | 0.7 | 0.050 | 0.040 | 66 |
| 6 | 3.2 | 0.5 | 1.1 | 0.050 | 0.040 | 61 |
| 7 | 3.3 | 0.5 | 0.9 | 0.050 | 0.040 | 61 |
| 8 | 3.5 | 0.7 | 0.5 | 0.010 | 0.010 | 64 |
| 9 | 3.5 | 0.7 | 0.8 | 0.025 | 0.025 | 65 |
| 10 | 3.8 | 0.5 | 0.7 | 0.020 | 0.020 | 66 |
| 11 | 3.8 | 0.4 | 1.2 | 0.015 | 0.015 | 69 |
| 12 | 3.6 | 0.5 | 1.2 | 0.050 | 0.010 | 66 |
| 13 | 3.6 | 0.5 | 0.8 | 0.050 | 0.050 | 64 |
| 14 | 3.6 | 1.7 | 1.1 | 0.015 | 0.030 | 79 |
| 15 | 3.4 | 1.7 | 0.9 | 0.005 | 0.005 | 76 |

**(Table 2)**

| Steel grade | Heating rate for section of 300 to 500°C (°C/sec) | Heating rate for section of 500 to 700°C (°C/sec) | Cracking temperatur e (°C) | Fraction of non-recrystalliz ation (area%) | Average grain diameter (µm) |
|---|---|---|---|---|---|
| 1 | 45 | 24 | 800 | 5 | 18 |
| 2 | 48 | 22 | 790 | 5 | 15 |
| 3 | 52 | 25 | 810 | 4 | 35 |
| 4 | 35 | 27 | 830 | 5 | 21 |
| 5 | 45 | 33 | 850 | 3 | 16 |
| 6 | 56 | 36 | 785 | 5 | 15 |
| 7 | 51 | 32 | 795 | 6 | 12 |
| 8 | 65 | 28 | 810 | 6 | 19 |
| 9 | 50 | 37 | 900 | 1 | 38 |
| 10 | 70 | 18 | 770 | 8 | 17 |
| 11 | 59 | 45 | 835 | 3 | 15 |
| 12 | 41 | 35 | 745 | 15 | 5 |
| 13 | 45 | 30 | 760 | 10 | 9 |
| 14 | 44 | 32 | 720 | 35 | 5 |
| 15 | 49 | 28 | 770 | 22 | 7 |

**(Table 3)**

| Steel grade (wt%) | SRA temperatur e (°C) | Jig pressure (MPa) | Right-hand side value of Equation 1 | {100}<025> fraction (area%) | Circumfere ntial iron loss (W/Kg) |
|---|---|---|---|---|---|
| 1 | 775 | 1.50 | 0.58 | 11.3 | 15.8 |
| 2 | 780 | 1.20 | 0.48 | 9.7 | 15.7 |
| 3 | 800 | 0.90 | 0.88 | 6.5 | 18.7 |
| 4 | 810 | 0.75 | 0.65 | 5.3 | 19.5 |
| 5 | 830 | 2.50 | 0.29 | 6.0 | 18.7 |
| 6 | 825 | 0.70 | 0.45 | 9.7 | 16.4 |
| 7 | 835 | 0.95 | 0.43 | 9.8 | 15.1 |
| 8 | 790 | 1.20 | 0.72 | 8.7 | 15.4 |
| 9 | 800 | 1.10 | 0.24 | 3.5 | 20.1 |
| 10 | 820 | 0.90 | 0.83 | 6.0 | 19.5 |
| 11 | 830 | 0.75 | 0.27 | 6.5 | 18.6 |
| 12 | 860 | 0.45 | 0.44 | 6.0 | 18.7 |
| 13 | 810 | 0.75 | 0.56 | 6.5 | 17.9 |
| 14 | 775 | 0.35 | 1.13 | 5.7 | 18.4 |
| 15 | 790 | 1.25 | 0.97 | 4.5 | 18.1 |

As shown in Tables 1 to 3, if components of the steel are appropriately adjusted and the process condition is appropriately adjusted so that a plurality of {100}<025> are formed, it may be confirmed that the circumferential iron loss is excellent.

If the components of the steel are not appropriately adjusted or the process condition is not appropriately adjusted so that there are few {100}<025>, it may be confirmed that the circumferential iron loss is inferior.

The present disclosure is not limited to the embodiments, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments described above are illustrative and not limited in all respects.

## Claims

1. An iron core comprising a laminate in which a non-oriented electrical steel sheet including, in wt%, Si: 1.5 to 4.5%, Al: 0.1 to 2.0%, and Mn: 0.1 to 2.0% and including the balance of Fe and an inevitable impurity is stacked in a plural number,
wherein the non-oriented electrical steel sheet has an area fraction of a grain having an orientation of 15° or less from {100}<025> of 7% or more.

2. The iron core of claim 1, wherein the non-oriented electrical steel sheet further includes at least one of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

3. The iron core of claim 1, wherein the non-oriented electrical steel sheet further includes 0.005 to 0.200 wt% of each or a combined amount of one or more of Sn, Sb, Bi, Pb, Ge, and As.

4. The iron core of claim 1, wherein the non-oriented electrical steel sheet further includes at least one of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

5. The iron core of claim 1, wherein the non-oriented electrical steel sheet further includes at least one of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

6. A method for manufacturing an iron core, comprising
preparing a non-oriented electrical steel sheet including, in wt%, Si: 1.5 to 4.5%, Al: 0.1 to 2.0%, and Mn: 0.1 to 2.0% and including the balance of Fe and an inevitable impurity;
punching and stacking the non-oriented electrical steel sheet to manufacture a laminate; and
annealing the laminate while pressing the laminate at a pressure of 0.1 to 2 MPa.

7. The method of claim 6, wherein in the preparing of the non-oriented electrical steel sheet, the non-oriented electrical steel sheet includes 3 area% or more of a non-recrystallization.

8. The method of claim 6, wherein in the preparing of the non-oriented electrical steel sheet, an average diameter of a grain of the non-oriented electrical steel sheet is 30 µm or less.

9. The method of claim 6, wherein a cracking temperature of the annealing of the laminate is 750 to 850°C.

10. The method of claim 6, wherein the annealing of the laminate is performed to satisfy Equation below: [Equation] 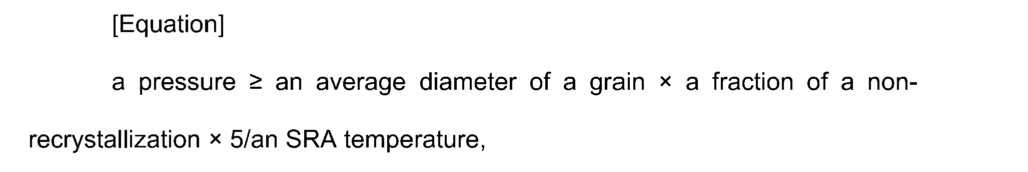 a pressure ≥ an average diameter of a grain × a fraction of a non-recrystallization × 5/an SRA temperature, wherein in Equation above, a unit of the pressure is MPa, a unit of the average diameter of the grain is µm, a unit of the fraction of the non-recrystallization is area%, and a unit of the SRA temperature is °C.

11. The method of claim 6, wherein the preparing of the non-oriented electrical steel sheet comprises:
hot-rolling a slab including, in wt%, Si: 1.5 to 4.5%, Al: 0.1 to 2.0%, and Mn: 0.1 to 2.0% and including the balance of Fe and an inevitable impurity to manufacture a hot-rolled steel sheet;
cold-rolling the hot-rolled steel sheet to manufacture a cold-rolled sheet; and
annealing the cold-rolled sheet.

12. The method of claim 11, wherein the slab further includes at least one of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

13. The method of claim 11, wherein the slab further includes 0.005 to 0.200 wt% of each or a combined amount of one or more of Sn, Sb, Bi, Pb, Ge, and As.

14. The method of claim 11, wherein the slab further includes at least one of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

15. The method of claim 11, wherein the slab further includes at least one of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), Te: 0.01 wt% or less (excluding 0%), and Mg: 0.0050 wt% or less (excluding 0%).

16. The method of claim 11, wherein the preparing of the non-oriented electrical steel sheet further comprises heating the cold-rolled sheet before the annealing of the cold-rolled sheet, a heating rate in a range of 300 to 500°C is 40°C/sec or more, and a heating rate in a range of 500 to 700°C is 20 to 38°C/sec.

17. The method of claim 11, wherein in the annealing of the cold-rolled sheet, a cracking temperature is 850°C or less.
